# EUROPEAN PATENT APPLICATION

(11) **EP 4 851 323 A1**
(43) Date of publication of application: **09.12.2026**
(21) Application number: 25773859.1
(22) Date of filing: 28.01.2025
(51) Int. Cl.: C22C 38/00, C21D 8/12, H01F 1/147, H01F 27/245, C22C 38/04, C22C 38/60

(54) **GRAIN-ORIENTED ELECTROMAGNETIC STEEL STRIP, LAMINATED IRON CORE, AND METHOD FOR PRODUCING GRAIN-ORIENTED ELECTROMAGNETIC STEEL STRIP**

(30) Priority: 21.03.2024 JP 2024045512
(71) Applicant: JFE Steel Corporation, Tokyo 100-0011 (JP)
(72) Inventor: OMURA, Takeshi, Tokyo 100-0011 (JP); ICHIHARA, Yoshihisa, Tokyo 100-0011 (JP); NAKAMURA, Koji, Tokyo 100-0011 (JP)
(74) Representative: Haseltine Lake Kempner LLP
(86) International application number: PCT/JP2025/002651
(87) International publication number: WO 2025/197304

(57) **Abstract**

To decrease BF, a grain-oriented electrical steel strip is provided, in which magnetic domains are refined by strain introduced linearly on at least one surface so as to intersect the rolling direction. A percentage of regions where the maximum magnetic domain wall spacing of closure domains within the sheet thickness is 10 µm or more, as measured by an X-ray magnetic circularly polarized emission microscope, is 50 % or more, relative to the total length of the grain-oriented electrical steel strip in the rolling direction.

## Description

### TECHNICAL FIELD

The present disclosure relates to grain-oriented electrical steel strips, stacked iron cores, and methods of producing grain-oriented electrical steel strips.

### BACKGROUND

Transformers in which grain-oriented electrical steel sheets are used are required to have low iron loss and low noise properties. To decrease iron loss of transformers, decreasing the iron loss of the grain-oriented electrical steel sheets themselves is effective. One technique for achieving this involves refining magnetic domains by irradiating a steel sheet surface with a high-energy beam such as a laser beam, a plasma beam, an electron beam, or the like. This technique not only refines the main magnetic domains but also forms new magnetic domain structures called closure domains in the steel sheet, thereby achieving low iron loss.

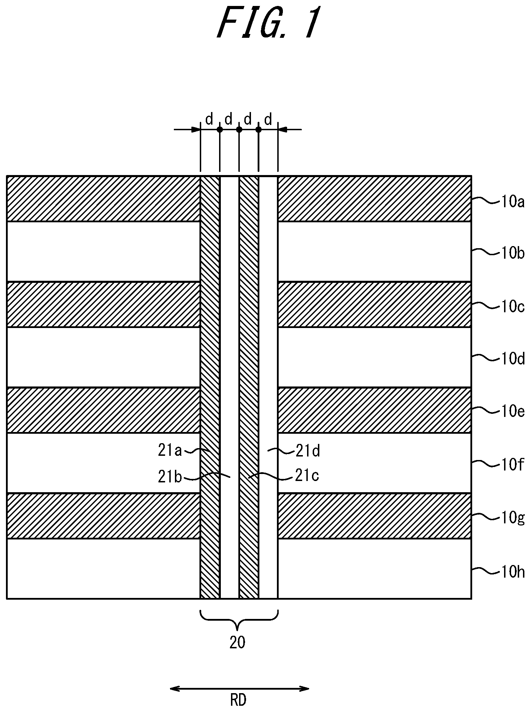

FIG. 1 is a schematic diagram illustrating the magnetic domain structure of a grain-oriented electrical steel sheet that has undergone the magnetic domain refining treatment described above, as observed from a direction perpendicular to the surface of the steel sheet. In the grain-oriented electrical steel sheet, main magnetic domains 10a to 10h having different magnetization directions are arranged alternately, and each of the main magnetic domains 10a to 10h extends in the rolling direction (RD). Further, a linear region (strain introduction section 20) in which strain is introduced by irradiation with a high-energy beam is formed so as to intersect the rolling direction, and closure domains 21a to 21d are formed in the strain introduction section 20. Similar to the main magnetic domains, the closure domains consist of closure domains 21a to 21d having different magnetization directions arranged alternately. The boundary between adjacent magnetic domains is called a magnetic domain wall, and the distance between magnetic domain walls is called magnetic domain wall spacing (or magnetic domain width). As illustrated in this diagram, by introducing strain that intersects the main magnetic domains, the main magnetic domains can be refined, that is, the magnetic domain width of the main magnetic domains can be decreased. As a result, the iron loss in the grain-oriented electrical steel sheet can be decreased. Note that FIG. 1 is merely a schematic representation of the structure of a very narrow region of the grain-oriented electrical steel sheet, and the number of magnetic domains and the ratio of dimensions illustrated in the diagram do not necessarily correspond to an actual structure.

As described above, progress has been made in improving the iron loss of grain-oriented electrical steel sheets. However, even when a transformer is produced by using a grain-oriented electrical steel sheet having low iron loss as the iron core, this does not necessarily lead to a decrease in the iron loss of the resulting transformer (transformer core loss). This is because, while the excitation magnetic flux used to evaluate the iron loss of the grain-oriented electrical steel sheet itself only includes the component in the rolling direction, the excitation magnetic flux used when the steel sheet is actually used as the iron core of a transformer includes not only the component in the rolling direction but also the component perpendicular to the rolling direction.

Building factor (BF) is an index that is commonly used to represent the difference in iron loss between blank sheets themselves and a transformer formed from the blank sheets, and is defined as a ratio of the transformer core loss to the iron loss of the blank sheets. When BF is greater than 1, this means that the iron loss of the transformer is greater than the iron loss of the blank sheets. A grain-oriented electrical steel sheet is a material that exhibits the lowest iron loss when magnetized in the rolling direction, and therefore when incorporated into a transformer that is magnetized in directions other than the rolling direction, the iron loss increases, and BF becomes greater than 1. In order to improve the energy efficiency of the transformer, it is necessary not only to lower the iron loss of the blank sheets but also to decrease BF as much as possible, that is, to bring BF as close to 1 as possible.

For example, in Patent Literature (PTL) 1, a method is described for improving BF by optimizing the total tension applied to a steel sheet by a forsterite film and a tension coating, even when the coating deteriorates due to laser irradiation or electron beam irradiation.

Further, in PTL 2, a technique is described for achieving a good transformer core loss property by optimizing the spacing between dots formed by carrying out electron beam irradiation in a dot-sequence pattern.

On the other hand, focusing on closure domains that are formed at the time of magnetic domain refining using laser irradiation, techniques have also been proposed to decrease iron loss by optimizing the shape and dimensions of closure domains (see PTL 3, PTL 4).

### CITATION LIST

### Patent Literature

PTL 1: JP 2012-031498 A
PTL 2: JP 2012-036450 A
PTL 3: JP H11-279645 A
PTL 4: JP 2002-012918 A

### SUMMARY

### (Technical Problem)

By applying the techniques described above, it is possible to improve BF to some extent. However, a BF of 1 is far from being achieved, and there is currently a demand for further improvements to BF.

The present disclosure is made in view of the above circumstances, and it would be helpful to provide a grain-oriented electrical steel strip and a stacked iron core that can further decrease BF.

### (Solution to Problem)

The inventors conducted intensive research to solve the above problem. In particular, the inventors focused on the fact that even when the iron loss of the grain-oriented electrical steel strip as a material (hereinafter referred to as "material iron loss") is the same, BF may differ, and investigated causes of this difference. As a result, the inventors made the following discoveries.
(1) The maximum magnetic domain wall spacing (magnetic domain width) of the closure domains within the sheet thickness, as measured by an X-ray magnetic circularly polarized emission microscope, has a significant effect on BF.
(2) In conventional typical magnetic domain refining treatment, the magnetic domain wall spacing varies greatly in the rolling direction of a single steel strip, resulting in a deterioration of BF.
(3) When carrying out magnetic domain refining treatment by irradiation with a high-energy beam, the magnetic domain wall spacing can be appropriately controlled by introducing strain while dynamically controlling the focus of the high-energy beam, and as a result, BF can be effectively improved.

The following describes the main results of experiments conducted to obtain the above discoveries.

### • Deterioration of BF over the long term

Magnetic domain refining treatment for grain-oriented electrical steel strips is typically carried out by irradiating the surface of the steel strip with a high-energy beam while continuously transporting the steel strip in the rolling direction after final annealing. The time required for magnetic domain refining treatment of a single steel strip is not very long, but magnetic domain refining treatment is carried out continuously on a large number of steel strips. Therefore, in actual factories, magnetic domain refining treatment apparatus is used continuously for long periods of time, often some months or longer.

To study the impact of such long-term, continuous magnetic domain refining treatment on BF, magnetic domain refining treatment was continuously carried out for a period of six months or longer using a single magnetic domain refining treatment apparatus. During that period, every month, the steel strips that had undergone final annealing under the same conditions were subjected to magnetic domain refining treatment by electron beam irradiation under the same conditions. The resulting steel strips (grain-oriented electrical steel strips) that had undergone magnetic domain refining were designated as steel strips A to G, in order from the earliest to the latest.

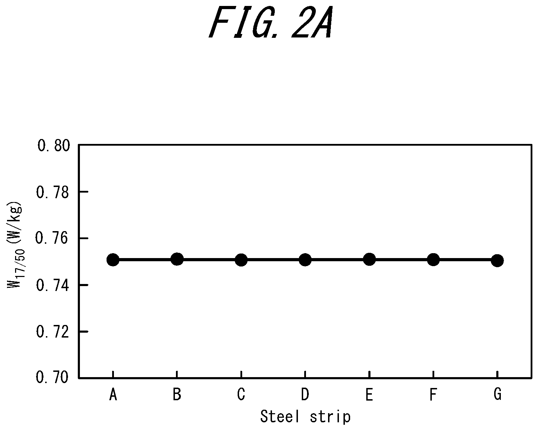

Samples (single sheet samples) for material iron loss evaluation were cut from each of the steel strips A to G, and the material iron loss W_{17/50} was evaluated. The evaluation results are illustrated in FIG. 2A.

Further, iron cores for transformers were fabricated by stacking grain-oriented electrical steel sheets cut from the grain-oriented electrical steel strips. The iron cores were three-phase three-leg stacked iron cores, and had a shape of a rectangle having sides of 500 mm, made from steel sheets having a width of 100 mm. The iron cores were produced by cutting the grain-oriented electrical steel sheets at an oblique angle so that the longitudinal direction was the rolling direction, and then stacking these sheets to a thickness of approximately 15 mm for an iron core weight of approximately 20 kg. In the stacking procedure, sets of two steel sheets were stacked in five step laps, and arranged in a step-lap joint configuration. The iron core components were stacked flat on a plane, and squeezed between Bakelite retainer plates under a load of about 0.1 MPa.

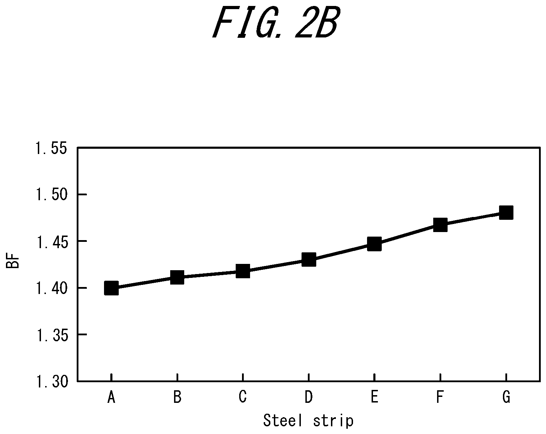

Next, the transformer core loss of the fabricated stacked iron cores was measured. The excitation conditions in the measurement were a phase difference of 120°, a maximum magnetic flux density of 1.7 T, and a frequency of 50 Hz. From the obtained transformer core loss and the material iron loss calculated earlier, BF was determined using the following expression. The results are illustrated in FIG. 2B.
BF = transformer core loss / material iron loss

As can be seen from the results illustrated in FIG. 2A and FIG. 2B, while the material iron loss remained at almost the same level over a long period, BF gradually increased.

### • Correlation between maximum magnetic domain wall spacing and BF obtained using different measurement methods and locations

The inventors hypothesized that the cause of the deterioration of BF might be due to differences in the closure domains introduced by the magnetic domain refining treatment. The inventors observed the closure domains of the steel strips A to G and measured the average magnetic domain wall spacing of the closure domains. Here, "magnetic domain wall spacing" refers to the distance between adjacent domain walls and is also called "magnetic domain width". In FIG. 1, d represents the magnetic domain wall spacing of individual closure domains, and this "magnetic domain wall spacing (magnetic domain width) d" is different from the overall width of the region where the closure domains are formed (strain introduction section 20).

Observation of the closure domains was carried out using the following three methods, of which methods (2) and (3) were carried out at two locations: the steel sheet surface and within the steel sheet. Note that the method using the domain viewer is only applicable to the steel sheet surface.
(1) Observation using a domain viewer
(2) Observation using a Kerr effect microscope
(3) Observation using an X-ray magnetic circularly polarized emission microscope

For the observation using the domain viewer of (1), above, CMOS-Magview produced by Matesy GmbH was used. For the observation using the Kerr effect microscope of (2), above, a Kerr effect microscope BH-786V-JS produced by Neoark Corporation was used. For the observation using the X-ray magnetic circularly polarized emission microscope of (3), above, synchrotron radiation was used. The specific observation method was as described in "Observation of transverse domains in grain-oriented electrical steel by means of X-ray magnetic circularly polarized emission microscopy" in the Digests of the 46th Annual Conference on Magnetics in Japan, 2022, p. 58. In the observations using the X-ray magnetic circularly polarized emission microscope, magnetic domains at the surface and within the steel strip were observed by changing the incident position of the synchrotron radiation.

The average magnetic domain wall spacing at the steel strip surface was measured as follows. First, the steel strip to be measured was divided into 50 equal sections along the rolling direction (longitudinal direction), and 50 samples were taken. Next, each sample was further divided into 10 sections in the sheet transverse direction, and a 30 mm × 30 mm observation sample was taken from a center portion of each divided region. Subsequently, the closure domains at the surface of the observation sample were observed in a 1 mm × 1 mm field of view randomly selected from a 30 mm × 30 mm region, and the magnetic domain wall spacing of the closure domains was measured. The average value of magnetic domain wall spacing of ten observation samples each divided into ten sections in the sheet transverse direction was taken as the average magnetic domain wall spacing in the sheet transverse direction. Similar measurements were carried out on 50 samples each divided into 50 sections in the rolling direction, and the average value of average magnetic domain wall spacing in the sheet transverse direction was taken as the "average magnetic domain wall spacing at the steel strip surface".

For observation within the steel sheet, the steel strip was further divided into 5 µm intervals in the depth direction (thickness direction), and the average magnetic domain wall spacing at each depth was determined using the procedure described above. Next, the maximum value of the average magnetic domain wall spacing at each depth was taken as the "maximum magnetic domain wall spacing within the sheet thickness" of the steel strip.

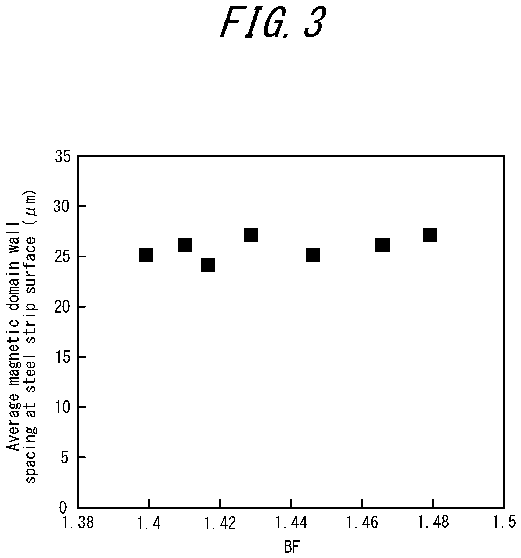

The above measurements were carried out for each of the steel strips A to G to obtain the "average magnetic domain wall spacing at the steel strip surface" and the "maximum magnetic domain wall spacing within the sheet thickness". FIG. 3 to FIG. 5B illustrate correlations between the obtained "average magnetic domain wall spacing at the steel strip surface" or "maximum magnetic domain wall spacing within the sheet thickness" and BF. Each drawing corresponds to the following observation results.
- FIG. 3: measurement results at steel strip surface using the domain viewer
- FIG. 4A: measurement results of steel strip surface using the Kerr effect microscope
- FIG. 4B: measurement results within sheet thickness using the Kerr effect microscope
- FIG. 5A: measurement results at steel strip surface using the X-ray magnetic circularly polarized emission microscope
- FIG. 5B: measurement results within sheet thickness using the X-ray magnetic circularly polarized emission microscope

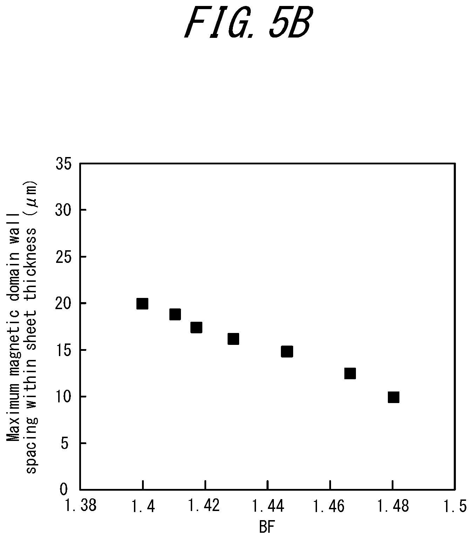

As indicated in FIG. 5B, there was a correlation between the "maximum magnetic domain wall spacing within the sheet thickness" observed by the X-ray magnetic circularly polarized emission microscope and BF. In contrast, no correlation was found between the "maximum magnetic domain wall spacing within the sheet thickness" measured by the Kerr effect microscope and BF. Further, no correlation was found between the average magnetic domain wall spacing at the steel strip surface and BF by any of the measurement methods.

The reasons for the differences due to the above measurement methods and measurement locations are not clear, but may be as follows.
(i) Cross-sectional observation using a Kerr effect microscope requires processing the steel strip to expose the observation surface. This processing releases the constraints within the steel strip, changing the internal strain distribution. Therefore, it is not possible to observe the magnetic domains in the state in which the iron core is actually used.
(ii) In contrast, X-ray magnetic circularly polarized emission microscopy allows for non-destructive observation within the steel strip, making it possible to observe the magnetic domains in the state in which the steel is actually used as an iron core.
(iii) The closure domains have magnetization components other than in the rolling direction, and therefore the presence of closure domains is advantageous in decreasing BF. Further, closure domains are repeatedly created and annihilated during the magnetization process, and therefore a larger magnetic domain wall spacing (that is, a wider magnetic domain width) makes it less likely for these closure domains to disappear, which is advantageous in decreasing BF.
(iv) The strain caused by high-energy beam irradiation is introduced from the surface layer of the steel strip, and therefore the thermal energy that causes the strain is sufficiently large at the steel sheet surface layer. Therefore, the influence of variations in conditions during magnetic domain refining treatment on the magnetic domain wall spacing was relatively small, and as a result, no significant correlation was found between the "average magnetic domain wall spacing at the steel strip surface" and BF.
(v) On the other hand, the thermal energy introduced by high-energy beam irradiation is attenuated as it propagates into the interior of the steel strip. In this state of energy attenuation, variations in the conditions during the magnetic domain refining treatment have a relatively large effect on the magnetic domain wall spacing, and as a result, a correlation was observed between the "maximum magnetic domain wall spacing within the sheet thickness" and BF.

### • Variation in focus conditions

As a cause of the variation in the "maximum magnetic domain wall spacing within the sheet thickness" as illustrated in FIG. 5B, variations in the focusing conditions during high-energy beam irradiation were investigated.

During magnetic domain refining treatment by electron beam irradiation, the focus of the electron beam can be adjusted by controlling the focusing current. In the magnetic domain refining treatment for the steel strips A to G, the initially set focusing current value I₀ was used without any changes.

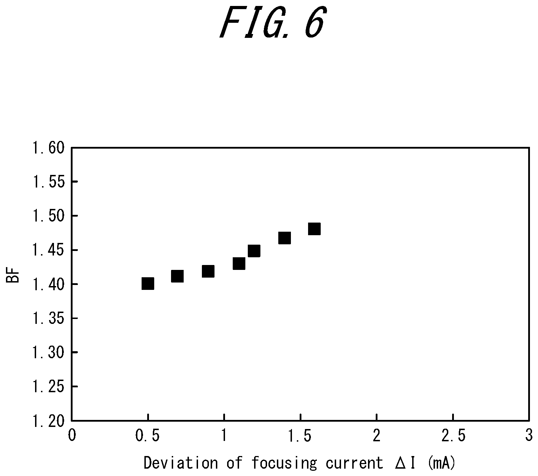

At this time, a beam profiler was used to investigate the focusing currents I_{A} to I_{G} that resulted in just focus during the treatment of each steel strip A to G (one month apart). Here, just focus refers to the state in which the beam profile intensity is maximum (beam diameter is minimum) at the treatment surface (steel strip surface). The difference between each of the obtained focusing currents I_{A} to I_{G} and the initially set focusing current value I₀ is defined as the focusing current deviation ΔI. FIG. 6 illustrates correlation between the obtained focusing current deviation ΔI and BF.

As can be seen from FIG. 6, a correlation was observed between the focusing current deviation ΔI and BF. This indicates that when magnetic domain refining treatment is carried out continuously over a long period of time, the focusing current at which just focus occurs gradually deviates from the initially set focusing current value I₀, resulting in an increase in BF.

This focus shift may be caused by the following reasons. In the case of electron beams, continuous use of the electron beam source leads to a decrease in electron generation efficiency due to cathode depletion. As a result, in order to extract the same number of electrons, the electron generation area must be increased. This change in electron generation area causes variation in the initial beam diameter, which is thought to alter the focusing current at which just focus occurs. Further, in addition to changes over time, electron generation efficiency can also change due to individual differences in cathodes, variations in cathode heating temperature and vacuum level in the electron gun chamber, and as a result, the just focus can vary.

As mentioned earlier, the steel strips A to G had almost the same material iron loss. Therefore, even when the focus conditions described above vary, product performance when evaluated based solely on material iron loss will always be within acceptable limits. In that sense, the changes in the above focus conditions can be considered a minor issue. However, in order to improve BF, it may be considered important to carry out focus adjustment with greater precision in order to decrease the effects of such variation in focus conditions.

### • Control based on bias voltage

As mentioned above, variations in focus conditions can be caused by a variety of factors. It is difficult to ascertain and control all of these various factors. Therefore, an attempt was made to estimate variations in the focus conditions by monitoring the bias voltage, which reflects the ease of extracting electrons from the cathode, and then control the focusing current value based on the results.

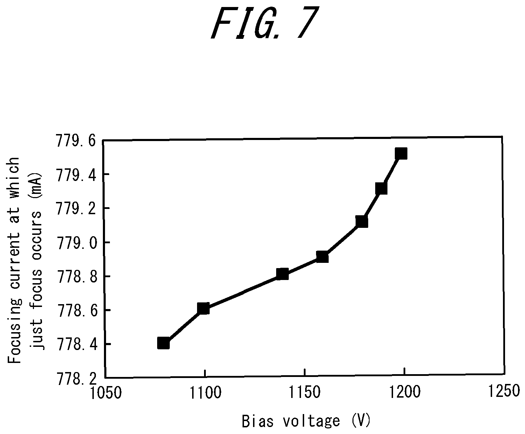

First, the electron generation efficiency was changed by varying the cathode heating temperature. The bias voltage changes in accordance with this change in electron generation efficiency. Therefore, a relationship between the bias voltage and the focusing current that results in just focus was investigated. As a result, as illustrated in FIG. 7, it was discovered that the focusing current at which just focus occurs decreases as the bias voltage decreases.

Next, in order to confirm the effect of controlling the focusing current, magnetic domain refining treatment was carried out at one-month intervals under the following three conditions, similar to the experiment described above.

### • Condition 1: no adjustment of focusing current

Under condition 1, no adjustment was made to the focusing current. That is, after setting the focusing current when carrying out the magnetic domain refining treatment on the very first steel strip, the treatment was continued using the same focusing current.

### • Condition 2: adjustment at the steel strip level

Under condition 2, when carrying out magnetic domain refining treatment at one-month intervals as described above, the focusing current was adjusted based on the bias voltage at the start of treatment for each steel strip. That is, when carrying out the magnetic domain refining treatment at each timing (every month), the bias voltage was checked, and the deviation of the focusing current was predicted from the difference between the bias voltage at the time of focus setting and the current bias voltage. After adjusting the focusing current to achieve just focus, the magnetic domain refining treatment was carried out.

### • Condition 3: dynamic control

Under condition 3, the focusing current was adjusted based on the bias voltage while a single steel strip was subjected to magnetic domain refining treatment. Under this condition, the focus was dynamically controlled while a single steel strip was being transported and the magnetic domain refining treatment was continuously carried out, in order that irradiation was always carried out in a focused state.

The resulting steel strips (grain-oriented electrical steel strips) that had undergone magnetic domain refining treatment were designated as steel strips H to P, in order from the earliest to the latest.

When the iron loss of the steel strips obtained in the above experiment was measured, the iron loss W_{17/50} was approximately 0.68 W/kg for all the steel strips, indicating very good magnetic properties.

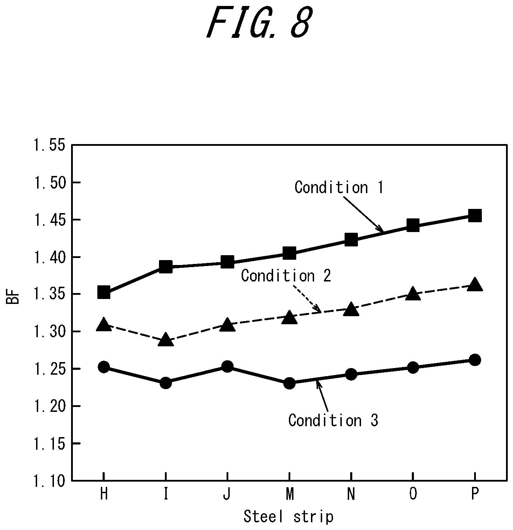

On the other hand, when a stacked iron core was prepared from each steel strip using the same procedure as in the previous experiment and BF was measured, the results illustrated in FIG. 8 were obtained. In other words, under condition 1, where no control was applied, BF deteriorated over time, similar to the results illustrated in FIG. 2B above. On the other hand, under condition 2, where the focus was adjusted on a by-strip basis, the deterioration of BF was suppressed compared to condition 1, but was not completely suppressed. In contrast, under condition 3, where the focus was dynamically controlled, the deterioration of BF was greatly suppressed compared to condition 2.

From these results, it can be seen that when carrying out magnetic domain refining treatment by irradiation with a high-energy beam, it is important to introduce strain while dynamically controlling the focus of the high-energy beam. This indicates that variation in focus conditions occurs not only over long-term spans such as one month, but also on extremely short timescales, such as the time it takes to carry out magnetic domain refining treatment on a single steel strip.

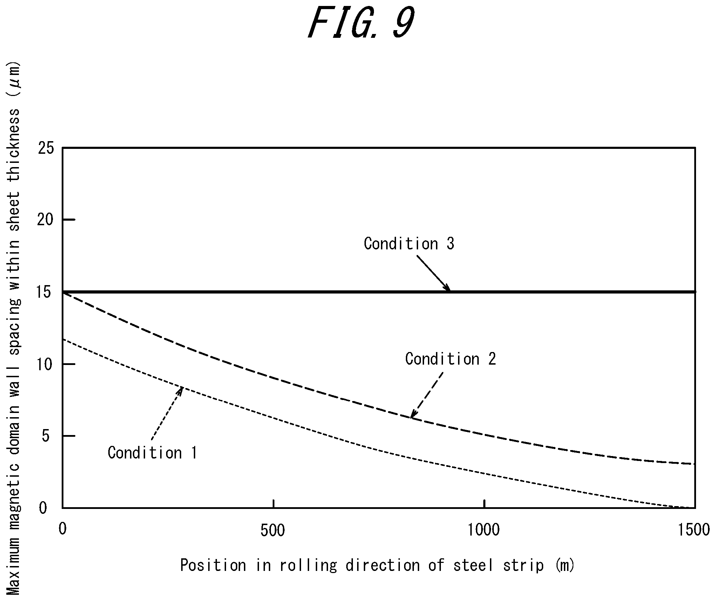

Next, for each of the steel strips H obtained under conditions 1 to 3, the "maximum magnetic domain wall spacing within the sheet thickness" was measured using the X-ray magnetic circularly polarized emission microscope. FIG. 9 is a graph plotting the measured "maximum magnetic domain wall spacing within the sheet thickness" against the position in the rolling direction (longitudinal direction) of steel strips. The zero point on the horizontal axis in FIG. 9 represents the leading edge of the steel strips, that is, the position where the magnetic domain refining treatment was first carried out.

These results indicate that under conditions 1 and 2, where dynamic control is not carried out during the processing of a single steel strip, the maximum magnetic domain wall spacing varies greatly depending on the position in the rolling direction of the steel strip. This variation may be due to variations in the focus conditions, as described above. Under condition 2, the focusing current was adjusted at the start of the magnetic domain refining treatment for the steel strip, resulting in an overall increase in the maximum magnetic domain wall spacing compared to condition 1. However, the slope of the plots was similar for both condition 2 and condition 1. This indicates that simply adjusting the focusing current at the start of the magnetic domain refining treatment is insufficient to prevent subsequent variation in the focus conditions. In contrast, under condition 3, where the focus was dynamically controlled, the variation in the maximum magnetic domain wall spacing according to the position in the rolling direction of the steel strip was significantly suppressed.

### • Maximum closure domain width

As described above, it was found that when applying magnetic domain refining treatment by irradiating with a high-energy beam, variation in the maximum closure domain width can be suppressed by introducing strain while dynamically controlling the focus. Therefore, the inventors next considered what range the maximum closure domain width should be in order to suppress the increase in BF.

Specifically, steel strips having various magnetic domain wall spacings were produced by applying magnetic domain refining treatment to steel strips obtained under the same conditions after final annealing, under different focus conditions. In the magnetic domain refining treatment, the focus was dynamically controlled while treating one steel strip to maintain a constant focus state along the entire length in the rolling direction. The focus state was varied from upper focus to under focus for each steel strip.

Next, the "maximum magnetic domain wall spacing within the sheet thickness" and BF of each obtained steel strip were measured using the methods described above. In all steel strips, there was no variation in the "maximum magnetic domain wall spacing within the sheet thickness" in the rolling direction; it remained constant.

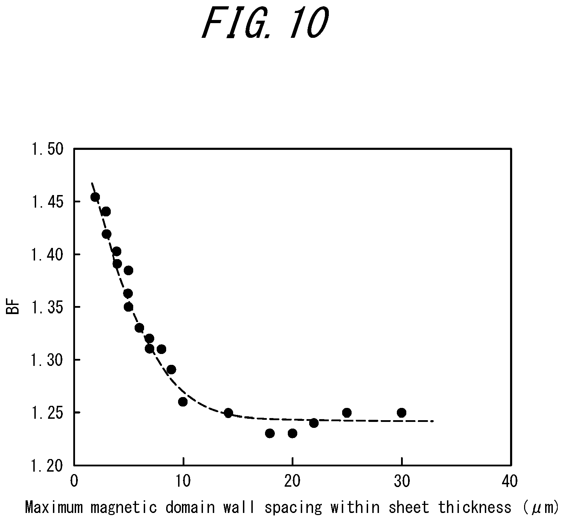

FIG. 10 is a graph plotting the measured BF against the "maximum magnetic domain wall spacing within the sheet thickness". These results indicate that when the maximum magnetic domain wall spacing of the closure domains, as measured by an X-ray magnetic circularly polarized emission microscope, is 10 µm or greater, then BF is maintained in a good state.

### • Control based on orifice temperature

In magnetic domain refining treatment using electron beam irradiation, focus control is possible not only by monitoring the bias voltage as described above, but also by monitoring an orifice temperature. The orifice is positioned so that some electrons are blocked in the beam path. The orifice is positioned between the cathode and the focusing coil.

A change in how easily electrons can be extracted from the cathode alters the surface area that emits electrons in the cathode. The emission area is small when electrons are easily extracted, and large when electrons are difficult to extract. The beam diameter up to the focusing coil changes according to the emission area, and the focusing current value that achieves just focus at the steel sheet surface varies depending on the beam diameter at the point the beam reaches the focusing coil. As the beam diameter changes, the amount of electrons cut off by the orifice changes. The number of electrons that are cut off is reflected in the orifice temperature, so by monitoring the orifice temperature, it is possible to know the variation in beam diameter. Specifically, it can be observed that the beam diameter increases as the orifice temperature rises, and conversely, the beam diameter decreases as the orifice temperature falls.

Therefore, by understanding the relationship between the orifice temperature and the focusing current in advance, it is possible to dynamically control the focus based on orifice temperature change during magnetic domain refining treatment.

The position where the orifice temperature is measured is not particularly limited and can be any point on the orifice. However, from the viewpoint of understanding beam changes in more detail, it is preferable to measure the temperature at multiple positions on the orifice. For example, in a roughly circular orifice, temperature can be measured at multiple equally spaced positions in the angular direction (circumferential direction). When measuring at 120° intervals, the number of measurement points is three, and when measuring at 90° intervals, the number of measurement points is four. By measuring the temperature at multiple positions in this way, it is also possible to determine the direction in which the beam changed. For focus control, an average value of temperatures measured at multiple positions on the orifice may be used as the orifice temperature.

It should be noted that all of the above experiments used magnetic domain refining treatment by electron beam irradiation. However, it was found that similar variation in focus conditions occurs even when using laser irradiation for magnetic domain refining treatment. In laser irradiation, thermally induced optical distortion generated in the focusing lens varies depending on the beam power. This thermally induced optical distortion changes the focal length of the lens, and is therefore a main cause of focus variation. While monitoring the amount of distortion is difficult, when the relationship between laser power and focal length variation is understood in advance, it becomes possible to dynamically control the focus based on the laser beam power during magnetic domain refining treatment. Further, laser power changes not only over time but also depending on irradiation conditions (such as temperature and humidity). Therefore, even immediately after adjusting the focus, there is a high possibility that the conditions for achieving just focus have changed.

Dynamic control of the focus in laser irradiation can be carried out based on the orifice temperature, similar to the case of electron beam irradiation. The orifice is installed so as to cut off a portion of the laser beam in the beam path. When the laser power is higher than a set value, the beam energy cut off by the orifice increases, causing the temperature of the orifice to rise. Conversely, when the power is lower than the set value, the amount of beam energy that is cut off decreases, and therefore the temperature of the orifice decreases. Therefore, based on the relationship between the orifice temperature and focal length determined in advance, the position of the focusing lens for the laser beam can be adjusted according to the measured temperature of the orifice.

### • Influence on stacked iron core

Next, when producing a stacked iron core by stacking multiple grain-oriented electrical steel sheets, the inventors investigated the influence of the maximum magnetic domain wall spacing within the sheet thickness of the grain-oriented electrical steel sheets on BF. Specifically, grain-oriented electrical steel sheets were cut from grain-oriented electrical steel strips produced under various conditions, and these sheets were combined to create stacked iron cores having various BF values.

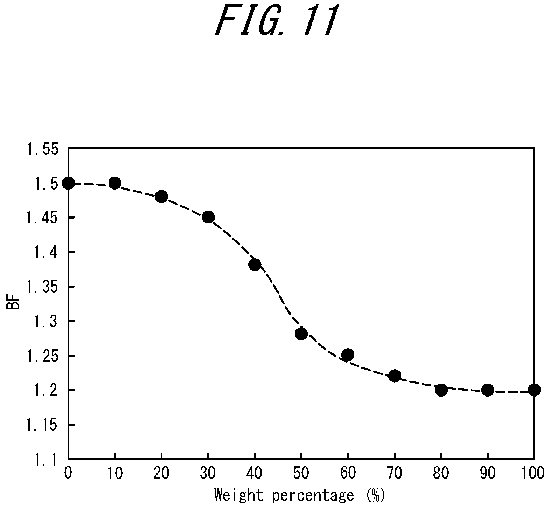

FIG. 11 is a graph plotting BF against "weight percentage of regions where maximum magnetic domain wall spacing is 10 µm or more". The horizontal axis, "weight percentage of regions where maximum magnetic domain wall spacing is 10 µm or more", refers to the "percentage of the regions of the grain-oriented electrical steel sheets where the maximum magnetic domain wall spacing of the closure domains within the sheet thickness is 10 µm or more, as measured by an X-ray magnetic circularly polarized emission microscope, relative to the total weight of the multiple grain-oriented electrical steel sheets constituting the stacked iron core".

As illustrated in FIG. 11, when the "weight percentage of regions where maximum magnetic domain wall spacing is 10 µm or more" was 50 % or more, BF improved. Further, when the "weight percentage of regions where maximum magnetic domain wall spacing is 10 µm or more" was 80 % or more, BF improved further, and BF was lowest at 100 %.

When the grain-oriented electrical steel strip used as the material for the stacked iron core also contains a similar percentage of regions where an increase in BF can be suppressed, then even without strict control over the grain-oriented electrical steel strip and arbitrary steel strip selection, a stacked iron core having good BF is obtainable. Therefore, in the grain-oriented electrical steel strip, it is preferable that the percentage of regions where the maximum magnetic domain wall spacing of the closure domains within the sheet thickness is 10 µm or more, as measured by an X-ray magnetic circularly polarized emission microscope, is 50 % or more, relative to the total length of the grain-oriented electrical steel strip in the rolling direction.

The present disclosure was completed based on the above discoveries, and primary features are as follows.
1. A grain-oriented electrical steel strip in which magnetic domains are refined by strain introduced linearly on at least one surface so as to intersect the rolling direction,
   wherein a percentage of regions where the maximum magnetic domain wall spacing of closure domains within the sheet thickness is 10 µm or more, as measured by an X-ray magnetic circularly polarized emission microscope, is 50 % or more, relative to the total length of the grain-oriented electrical steel strip in the rolling direction.
2. A stacked iron core of stacked grain-oriented electrical steel sheets,
   wherein a percentage of regions of the grain-oriented electrical steel sheets where the maximum magnetic domain wall spacing of closure domains within the sheet thickness is 10 µm or more, as measured by an X-ray magnetic circularly polarized emission microscope, is 50 % or more, relative to the total weight of the grain-oriented electrical steel sheets.
3. A method of producing the grain-oriented electrical steel strip according to 1, above, the method comprising:
   carrying out a magnetic domain refining treatment by irradiating the surface of a steel strip with a high-energy beam while continuously conveying the steel strip in the rolling direction after final annealing,
   wherein the percentage is made to be 50 % or more by introducing strain while dynamically controlling the focus of the high-energy beam during irradiation with the high-energy beam.
4. The method of producing the grain-oriented electrical steel strip according to 3, above,
   wherein the high-energy beam is an electron beam,
   and in the dynamic control of the focus,
      the bias voltage is measured,
      and the focusing current of the electron beam is adjusted according to the measured bias voltage, based on a predetermined relationship between the bias voltage and the focusing current.
5. The method of producing the grain-oriented electrical steel strip according to 3, above,
   wherein the high-energy beam is an electron beam,
   wherein an orifice is installed in the beam path of the electron beam to cut off a portion of the electron beam,
   and in the dynamic control of the focus,
      a temperature of the orifice is measured,
      and the focusing current of the electron beam is adjusted according to the measured temperature of the orifice, based on a predetermined relationship between the orifice temperature and the focusing current.
6. The method of producing the grain-oriented electrical steel strip according to 3, above,
   wherein the high-energy beam is a laser beam,
   wherein an orifice is installed in the beam path of the laser beam to cut off a portion of the laser beam,
   and in the dynamic control of the focus,
      a temperature of the orifice is measured,
      and a position of a focusing lens for the laser beam is adjusted according to the measured temperature of the orifice, based on a predetermined relationship between the orifice temperature and focal length.

### (Advantageous Effect)

According to the present disclosure, BF can be decreased.

### BRIEF DESCRIPTION OF THE DRAWINGS

In the accompanying drawings:
FIG. 1 is a schematic diagram illustrating a magnetic domain structure of a grain-oriented electrical steel sheet that has undergone magnetic domain refining treatment, as observed from a direction perpendicular to the surface of the steel sheet;
FIG. 2A is a graph illustrating change in material iron loss when grain-oriented electrical steel strips are produced at one-month intervals;
FIG. 2B is a graph illustrating change in BF when grain-oriented electrical steel strips are produced at one-month intervals;
FIG. 3 is a graph illustrating a correlation between "average magnetic domain wall spacing at the steel strip surface", measured using a domain viewer, and BF;

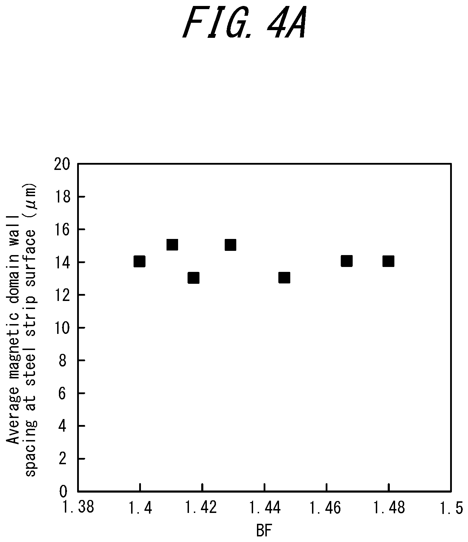

FIG. 4A is a graph illustrating a correlation between "average magnetic domain wall spacing at the steel strip surface", measured using a Kerr effect microscope, and BF;

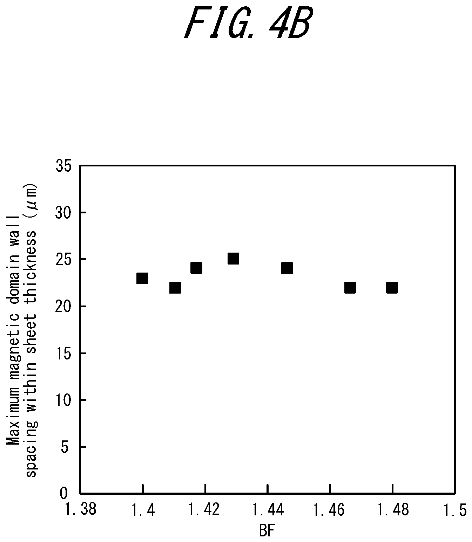

FIG. 4B is a graph illustrating a correlation between "maximum magnetic domain wall spacing within the sheet thickness", measured using a Kerr effect microscope, and BF;

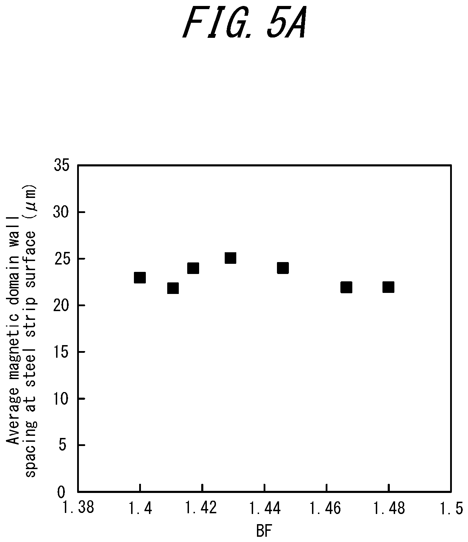

FIG. 5A is a graph illustrating a correlation between "average magnetic domain wall spacing at the steel strip surface", measured using an X-ray magnetic circularly polarized emission microscope, and BF;
FIG. 5B is a graph illustrating a correlation between "maximum magnetic domain wall spacing within the sheet thickness", measured using an X-ray magnetic circularly polarized emission microscope, and BF;
FIG. 6 is a graph illustrating a correlation between focusing current deviation ΔI and BF;
FIG. 7 is a graph illustrating an example of a relationship between bias voltage and focusing current at which just focus occurs;
FIG. 8 is a graph illustrating change in BF when grain-oriented electrical steel strips are produced at one-month intervals;
FIG. 9 is a graph plotting "maximum magnetic domain wall spacing within the sheet thickness" against position in the rolling direction (longitudinal direction) of steel strips;
FIG. 10 is a graph illustrating a relationship between "maximum magnetic domain wall spacing within the sheet thickness" and BF;
FIG. 11 is a graph plotting BF against "weight percentage of regions where maximum magnetic domain wall spacing is 10 µm or more";

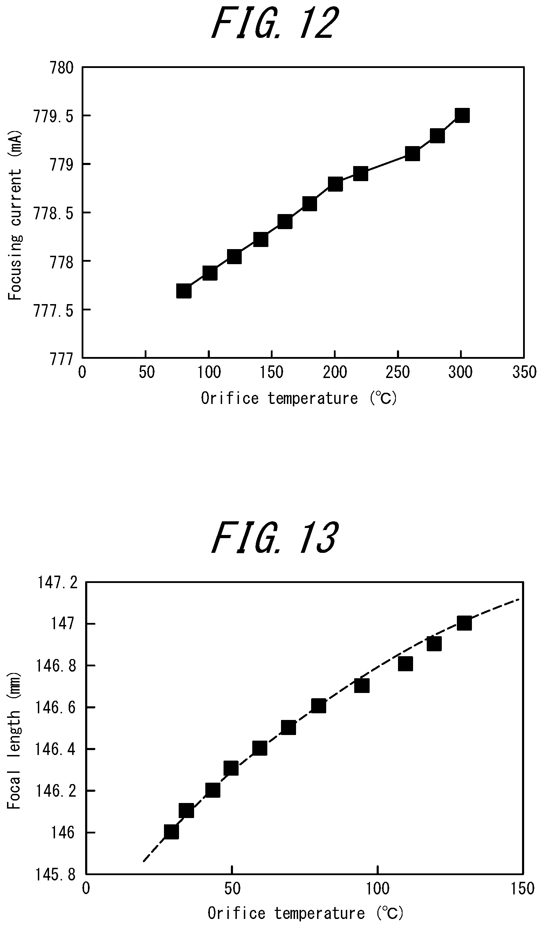

FIG. 12 is a graph illustrating an example of a relationship between orifice temperature and focusing current at which just focus occurs;
FIG. 13 is a graph illustrating an example of a relationship between orifice temperature and focal length at which just focus occurs.

### DETAILED DESCRIPTION

The present disclosure is described in detail below. The following description describes examples of preferred embodiments of the present disclosure, and does not limit the disclosure to the embodiments described below.

### [Grain-oriented electrical steel strip]

According to an embodiment of the present disclosure, a grain-oriented electrical steel strip is a grain-oriented electrical steel strip in which magnetic domains are refined by strain introduced linearly on at least one surface so as to intersect the rolling direction, wherein a percentage of regions where the maximum magnetic domain wall spacing of closure domains within the sheet thickness is 10 µm or more, as measured by an X-ray magnetic circularly polarized emission microscope, is 50 % or more, relative to the total length of the grain-oriented electrical steel strip in the rolling direction. Hereinafter, the "maximum magnetic domain wall spacing of the closure domains within the sheet thickness, as measured by an X-ray magnetic circularly polarized emission microscope" may sometimes be simply referred to as the "maximum magnetic domain wall spacing".

As the previous experimental results indicate, in order to obtain a good BF, the regions where the "maximum magnetic domain wall spacing" is 10 µm or more must account for 50 % or more of the total length of the grain-oriented electrical steel strip in the rolling direction. The greater the maximum average magnetic domain wall spacing within the sheet thickness, the later the timing at which the closure domains completely disappear when used as a transformer iron core, and as a result, the increase in BF is suppressed. While there is no particular upper limit to the maximum magnetic domain wall spacing, the width of the strain-introduced region has a practical upper limit on the order of about 100 µm.

From the viewpoint of further improving BF, the percentage of regions where the maximum magnetic domain wall spacing is 10 µm or more, relative to the total length of the grain-oriented electrical steel strip in the rolling direction, is preferably 75 % or more. The percentage is more preferably 90 % or more. No upper limit is placed on the percentage, and the percentage may be 100 %. The percentage is most preferably 100 %.

Further, the percentage of regions where the maximum magnetic domain wall spacing is 10 µm or more, relative to the total length in the rolling direction of the grain-oriented electrical steel strip, can be determined by the following procedure.

First, the steel strip is divided into 50 equal sections in the rolling direction (longitudinal direction), 10 sections in the sheet transverse direction, and 5 µm intervals in the depth direction (thickness direction). Each divided portion is observed using an X-ray magnetic circularly polarized emission microscope, and the magnetic domain wall spacing of the closure domains is measured. Next, the measured magnetic domain wall spacings are averaged across ten points in the sheet transverse direction to determine the "average magnetic domain wall spacing in the sheet transverse direction" for each depth. The maximum value among the "average magnetic domain wall spacings in the sheet transverse direction" obtained at each depth is defined as the "maximum magnetic domain wall spacing." The "maximum magnetic domain wall spacing" for each of the 50 sections divided in the rolling direction can thereby be obtained. Subsequently, the percentage of the 50 regions divided in the rolling direction where the maximum magnetic domain wall spacing is 10 µm or more is calculated.

The magnetic domain wall spacings of the closure domains in each divided region were measured using the method described above. Specifically, observation samples measuring 30 mm × 30 mm were taken from a central portion of each divided region. Subsequently, the closure domains at the surface of the observation sample were observed in a 1 mm × 1 mm field of view randomly selected from a 30 mm × 30 mm region, and the magnetic domain wall spacing of the closure domains was measured.

From the viewpoint of reducing variations in properties within the steel strip and further improving BF, it is preferable to make a difference Δd between the maximum and minimum values of the maximum magnetic domain wall spacings along the entire longitudinal direction of the steel strip 10 µm or less. The difference Δd is more preferably 5 µm or less. On the other hand, from the perspective of further decreasing BF, the smaller Δd is, the better. Therefore, no lower limit is placed on Δd, and Δd may be 0 µm.

### [Stacked iron core]

A stacked iron core according to an embodiment of the present disclosure is a stacked iron core formed by stacking a plurality of grain-oriented electrical steel sheets, wherein a percentage of regions of the grain-oriented electrical steel sheets where the maximum magnetic domain wall spacing of closure domains within the sheet thickness is 10 µm or more, as measured by an X-ray magnetic circularly polarized emission microscope, is 50 % or more, relative to the total weight of the grain-oriented electrical steel sheets.

As the previous experimental results indicate, when the weight percentage is 50 % or more, BF can be improved. Further, the weight percentage is preferably 80 % or more. The weight percentage is more preferably 90 % or more. No upper limit is placed on the weight percentage, and the weight percentage may be 100 %. The weight percentage is most preferably 100 %.

By using grain-oriented electrical steel sheets having known weight percentages, it is possible to produce a stacked iron core that satisfies the above conditions. Further, when evaluating the weight percentage in existing stacked iron cores, the stacking direction should be used as the reference instead of the rolling direction. For example, within each part of a stacked iron core, the stacking direction is divided equally into 50 sections, and 50 samples are taken. Then, a 30 mm × 30 mm observation sample can be taken from the central portion of each obtained sample and measured.

In the stacked iron core according to the present disclosure, the desired effects can be obtained by satisfying specific conditions for the grain-oriented electrical steel sheets used as described above. Therefore, the type and the like of the stacked iron core is not particularly limited. For example, the stacked iron core may be single-phase or three-phase, and may be either an outer-core type or an inner-core type. Further, the stacked iron core may have any number of legs, and may have either three or five legs for example.

### [Method of producing grain-oriented electrical steel strip]

The following describes a method of producing a grain-oriented electrical steel strip according to an embodiment of the present disclosure. The method of producing a grain-oriented electrical steel strip according to an embodiment of the present disclosure includes carrying out a magnetic domain refining treatment by irradiating the surface of a steel strip with a high-energy beam while continuously conveying the steel strip in the rolling direction after final annealing. Further, the percentage is made to be 50 % or more by introducing strain while dynamically controlling the focus of the high-energy beam during irradiation with the high-energy beam.

The method of dynamic control is not particularly limited. The focus control may be carried out continuously or intermittently. Examples of suitable control methods are described below. The control method is not limited to a method described below.

### • In the case of electron beam irradiation

When carrying out magnetic domain refining treatment using electron beam irradiation, the bias voltage during treatment can be monitored (measured), and the focus can be controlled accordingly. The bias voltage can be measured continuously or intermittently. Focus adjustment can be carried out by changing the current in the focusing coil (focusing current). To carry out the control, it is sufficient to determine in advance a relationship between the bias voltage and the focusing current at which the bias voltage achieves just focus. When determining the relationship, the bias voltage can be changed by adjusting a heater current.

When carrying out magnetic domain refining treatment using electron beam irradiation, it is possible to monitor not only the bias voltage mentioned above, but also an orifice temperature and control the focus accordingly. The orifice temperature can be measured continuously or intermittently. Focus adjustment can be carried out by changing the current in the focusing coil (focusing current). To carry out the control, it is sufficient to determine in advance a relationship between the orifice temperature and the focusing current at which the orifice temperature achieves just focus. When determining the relationship, the orifice temperature can be changed by adjusting the heater current.

### • In the case of laser irradiation

On the other hand, in the case of laser irradiation, the main cause of focus changes is thermal distortion of the lens due to power variation. Therefore, when carrying out magnetic domain refining treatment by laser irradiation, an orifice is installed in the beam path to cut off a portion of the laser beam. As a result, the temperature of the orifice changes due to the laser energy that is cut. Therefore, the orifice temperature during treatment can be monitored (measured), and the focus can be controlled accordingly.

The orifice temperature can be measured continuously or intermittently. Focus adjustment can be carried out by changing the position of the focusing lens. To carry out the control, a relationship between the orifice temperature and the focal length at which just focus occurs at that orifice temperature needs to be determined in advance, and the position of the focusing lens may be changed so that the distance between the focusing lens and the target object corresponds to the focal length at that orifice temperature. When determining the relationship, the orifice temperature can be changed by intentionally altering the beam power settings.

As described above, according to the present disclosure, it is important to dynamically control the focus during magnetic domain refining treatment. Therefore, other magnetic domain refining treatment conditions are not limited, and typical conditions can be applied.

For example, when irradiating with a high-energy beam, the direction in which the beam is scanned only needs to be in a direction that intersects with the rolling direction of the steel strip. In other words, the scanning direction only needs to be greater than 0° and 90° or less with respect to the rolling direction (RD) of the steel strip. By irradiating the steel strip with a beam while scanning in a direction intersecting the rolling direction, linear strain can be introduced into the surface of the steel strip so as to intersect the rolling direction. That is, the angle of the linearly introduced strain is the same as the scanning direction. The 90° direction corresponds to the transverse direction (direction perpendicular to the rolling direction; TD). The scanning direction is preferably 60° to 90° with respect to the rolling direction (RD) of the steel strip.

The power of the high-energy beam used for irradiation is not particularly limited and may be adjusted to introduce the desired strain. Typically, the power can be 50 W to 5 kW in both the cases of electron beam irradiation and laser irradiation. Further, from a productivity viewpoint, the deflection speed (scanning rate) is preferably 10 m/s or more. On the other hand, there is no upper limit to the deflection speed. However, when the deflection speed is set too high, larger apparatus is required to ensure the energy density necessary for magnetic domain refining treatment. Therefore, the deflection speed is preferably 400 m/s or less. The deflection speed is more preferably 200 m/s or less.

In magnetic domain refining treatment, high-energy beam irradiation can be repeatedly applied at intervals in the rolling direction (longitudinal direction) of the steel strip. This interval is generally called the "irradiation line spacing" or simply the "line spacing". The line spacing is not particularly limited. From the viewpoint of further reducing iron loss in grain-oriented electrical steel sheets, the line spacing is preferably more than 3.0 mm. The line spacing is preferably less than 8.0 mm.

The line spacing is equal to the spacing of the linear strains introduced into the grain-oriented electrical steel strip in the rolling direction. Therefore, in the grain-oriented electrical steel strip according to an embodiment of the present disclosure, the spacing of linear strain in the rolling direction is preferably more than 3.0 mm. The spacing of linear strain is preferably less than 8.0 mm.

Further, from the viewpoint of further decreasing iron loss, the beam diameter is preferably 0.20 mm or less. On the other hand, while there is no particular lower limit to the beam diameter, industrially, it is preferable to have a beam diameter of 0.010 mm or more. Here, beam diameter refers to the diameter of the irradiated energy beam at the point when it reaches the surface of the steel strip.

The steel strip used for the above-mentioned magnetic domain refining treatment is not particularly limited and can be produced using typical methods. The following describes an example of a method of producing a steel strip used in magnetic domain refining treatment.

A typical method of producing a grain-oriented electrical steel strip includes:
a hot rolling process of hot rolling a steel material (steel slab) to produce a hot-rolled steel strip;
a cold rolling process of cold rolling the hot-rolled steel strip to obtain a cold-rolled steel strip;
a primary recrystallization annealing process of carrying out primary recrystallization annealing and decarburization on the cold-rolled steel strip;
a coating process of applying an annealing separator to a surface of the steel strip after the primary recrystallization annealing process;
and a final annealing process of carrying out secondary recrystallization annealing and purification on the steel strip after the coating process. The magnetic domain refining treatment can be carried out after this final annealing process. Further, a hot-rolled sheet annealing process may optionally be included after the hot rolling process, before the cold rolling process. Further, in the cold rolling process, two or more cold rolling passes may be carried out, with intermediate annealing carried out in between.

### • Chemical composition

The steel strip used in the magnetic domain refining treatment can be produced, for example, by subjecting a steel material (steel slab) to processes such as rolling and annealing. Therefore, first, examples of chemical compositions of the steel material (steel slab) that can be suitably used are described. However, the present disclosure is not limited to the content described below. In the description of the chemical composition, the units "%" and "ppm" refer to "mass%" and "mass ppm", respectively, unless otherwise specified.

First, the chemical composition of the steel material (steel slab) used may include C, Si, and Mn as basic components in the following amounts.

### C: 0.08 % or less

C is a component added to improve the hot-rolled sheet microstructure. However, residual carbon can cause magnetic aging, and therefore C content in steel is typically decreased to 50 ppm or less during the production of an electrical steel strip by decarburization treatment, in order that magnetic aging does not occur. However, when the initial C content (C content of the steel material) exceeds 0.08 %, it becomes difficult to reduce the C content to 50 ppm or less even with decarburization. The C content of the steel material is therefore preferably 0.08 % or less. On the other hand, secondary recrystallization is possible even when the steel material does not contain C, and therefore no lower limit is placed on the C content, and the C content may be 0 %. However, from the viewpoint of improving the hot-rolled sheet microstructure, the C content is preferably 0.01 % or more.

### Si: 2.0 % to 8.0 %

Si is an element that increases the electrical resistance of steel and improves iron loss. To fully achieve the above effects, Si content is preferably 2.0 % or more. On the other hand, when the Si content exceeds 8.0 %, not only does workability decrease, but the magnetic flux density also decreases. Accordingly, the Si content is preferably 8.0 % or less. The Si content is more preferably 4.0 % or less.

### Mn: 0.005 % to 1.0 %

Mn is an element that has an effect of improving hot workability. To enhance the effect, Mn content is preferably 0.005 % or more. The Mn content is more preferably 0.01 % or more. On the other hand, when the Mn content exceeds 1.0 %, the magnetic flux density of the resulting grain-oriented electrical steel strip decreases. Accordingly, the Mn content is preferably 1.0 % or less. The Mn content is more preferably 0.1 % or less.

Further, in order to further improve the magnetic properties, the chemical composition of the steel material may optionally include at least one component selected from the group listed below, in addition to the basic components above.
Ni: 0.03 % to 1.50 %
Sn: 0.01 % to 1.50 %
Sb: 0.005 % to 1.50 %
Cu: 0.03 % to 3.0 %
P: 0.03 % to 0.50 %
Mo: 0.005 % to 0.10 %
Cr: 0.03 % to 1.50 %

Ni is an element that has an effect of improving the hot-rolled sheet microstructure and further enhances magnetic properties, and can be added as desired. To enhance the effect, Ni content is preferably 0.03 % or more. On the other hand, when the Ni content exceeds 1.50 %, secondary recrystallization may become unstable and magnetic properties may degrade. The Ni content is therefore preferably 1.50 % or less.

Further, Sn, Sb, Cu, P, Mo, and Cr are elements that have the effect of further improving magnetic properties, and each can be added as desired. When adding at least one of these elements, it is preferable to set the content of that element to be at least the lower limit value mentioned above in order to enhance the effect. On the other hand, excessive addition inhibits the development of secondary recrystallized grains. Therefore, when adding at least one of these elements, it is preferable to keep the content of each element no greater than the upper limit mentioned above.

Further, the chemical composition of the steel material may optionally contain an inhibitor element. As the inhibitor element, it is preferable to add at least one selected from the following group, for example.
Al: 0.01 % to 0.065 %
N: 0.005 % to 0.012 %
S: 0.005 % to 0.03 %
Se: 0.005 % to 0.03 %

For example, when using an AlN inhibitor, Al and N can be added. Further, when using a MnS or MnSe inhibitor, one or both of Se and S, along with Mn, can be added. Multiple inhibitors can be used in combination.

Conversely, according to the present disclosure, the grain-oriented electrical steel strip can be produced without using an inhibitor. When an inhibitor is not used, it is preferable to limit the content of Al, N, S, and Se in the chemical composition of the steel material to the following ranges, respectively. On the other hand, the lower limits of the content of Al, N, S, and Se are not particularly limited and may be 0 ppm.
Al: 100ppm or less
N: 50 ppm or less
S: 50 ppm or less
Se: 50ppm or less

The balance of the components other than those listed above consists of inevitable impurity and Fe. The inevitable impurity may include, for example, elements that are introduced as impurities during the production process.

On the other hand, in the production of a grain-oriented electrical steel strip, primary recrystallization annealing is carried out after rolling. During the primary recrystallization annealing, the steel strip is decarburized and the C content decreases. Further, during the final annealing the steel strip undergoes purification, resulting in a decrease in Al, N, S, Se, and the like. As a result of the above, the content of C, Al, N, S, and Se in the finally obtained grain-oriented electrical steel strip is decreased to impurity levels. Therefore, in the chemical composition of the grain-oriented electrical steel strip, Al, N, S, and Se may be considered as inevitable impurity. Typically, the Al content is 0.01 % or less, and the C, N, S and Se content is 0.005 % or less each.

Variation in content of components is negligible during the production process, other than the elements mentioned above that are decreased by decarburization and purification. Therefore, the content of other elements in the chemical composition of the final grain-oriented electrical steel strip is the same as that of the steel material described above.

### EXAMPLES

More detailed description is given below based on examples. The following examples merely represent preferred example embodiments, and the present disclosure is not limited to these examples. Embodiments of the present disclosure may be modified as appropriate to an extent that conforms to the spirit of the present disclosure, and all such modifications are included within the technical scope of the present disclosure.

First, some steel strips each having a thickness of 0.23 mm and a final annealed state were prepared, each having the same magnetic flux density (B₈ = 1.92 T). The grain-oriented electrical steel strips were obtained by carrying out a magnetic domain refining treatment over the entire longitudinal direction of the steel strips. The magnetic domain refining treatment was carried out under the conditions listed in Table 1 while the steel strips were continuously transported.

In some cases, when carrying out the magnetic domain refining treatment, strain was introduced while dynamically controlling the focus of the high-energy beam (electron beam or laser). For the examples using electron beam irradiation, the dynamic control was carried out based on a previously determined relationship between the bias voltage and the focusing current (FIG. 7) or between the orifice temperature and the focusing current (FIG. 12) that results in just focus. For the examples using laser irradiation, the dynamic control was carried out based on a previously determined relationship between the orifice temperature and the focal length (FIG. 13) that results in just focus. The focusing current that results in just focus is the focusing current at which the beam profile intensity is maximum (beam diameter is minimum) at the processing surface (steel strip surface). This was determined by changing the focusing current value using a known beam profiler and measuring the beam profile intensity.

For comparison, for some examples, the magnetic domain refining treatment was carried out without dynamic focus control.

Next, for each of the obtained grain-oriented electrical steel strips, the material iron loss W_{17/50} was measured at a magnetic flux density of 1.7 T and a frequency of 50 Hz. Further, the magnetic domain wall spacing of the closure domains within the thickness of the grain-oriented electrical steel strips was measured using an X-ray magnetic circularly polarized emission microscope, and the maximum magnetic domain wall spacing and the difference Δd between the maximum and minimum values of the maximum magnetic domain wall spacing over the entire longitudinal direction of the steel strips were determined. The measurement results are listed in Table 1.

Next, three-phase stacked iron cores were fabricated using the obtained grain-oriented electrical steel strips. For each iron core, overall width was 890 mm, depth was 800 mm, stacked thickness was 250 mm, iron core mass was about 1.0 t, and capacity was 2000 kVA. The joining method was a step lap method.

The loss W_{17/50} obtained from the stacked iron core was evaluated and BF was determined by comparison with the material iron loss. The results are listed in Table 1.

As can be seen from the results in Table 1, even without dynamic focus control, the same material iron loss as when dynamic control was carried out was obtained, provided that other irradiation conditions were the same. However, for each of the Examples according to the present disclosure in which dynamic focus control was carried out, variations in the magnetic domain wall spacing in the longitudinal direction of the steel strip were suppressed, and a grain-oriented electrical steel strip that satisfies the conditions of the present disclosure was obtained. Further, the stacked iron cores fabricated using those grain-oriented electrical steel strips met the conditions of the present disclosure, and BF was improved compared to the Comparative Examples.

**Table 1**

| No. | Production conditions | | | | | | | Grain-oriented electrical steel sheet | | | | Stacked iron core | | Remarks |
|---|---|---|---|---|---|---|---|---|---|---|---|---|---|---|
| | Magnetic domain refining treatment method | Power (W) | Irradiation line spacing (mm) | Deflection speed (m/s) | Beam diameter (mm) | Dynamic focus control | Control method | Average value of magnetic domain wall spacing across entire steel strip (µm) | Δd (µm) | Percentage of regions 10 µm or more *1 | Material iron loss W_{17/50} (W/kg) | Percentage of regions 10 µm or more *2 | BF | |
| 1 | Electron beam | 400 | 4 | 30 | 0.30 | yes | bias voltage | 25 | 6 | 100 | 0.72 | 100 | 1.30 | Example |
| 2 | | 400 | 4 | 30 | 0.30 | yes | orifice temp. | 25 | 6 | 100 | 0.72 | 100 | 1.30 | Example |
| 3 | | 400 | 4 | 30 | 0.30 | **no** | - | 8 | 12 | **20** | 0.72 | **20** | **1.46** | **Comparative Example** |
| 4 | | 400 | 4 | 30 | 0.15 | yes | bias voltage | 35 | 2 | 100 | 0.68 | 100 | 1.28 | Example |
| 5 | | 400 | 4 | 30 | 0.15 | yes | orifice temp. | 35 | 2 | 100 | 0.68 | 100 | 1.28 | Example |
| 6 | | 400 | 4 | 30 | 0.15 | **no** | - | 12 | 15 | **40** | 0.68 | **40** | **1.44** | **Comparative Example** |
| 7 | | 250 | 7 | 80 | 0.10 | yes | bias voltage | 11 | 3 | 80 | 0.74 | 80 | 1.31 | Example |
| 8 | | 250 | 7 | 80 | 0.10 | yes | orifice temp. | 11 | 3 | 80 | 0.74 | 80 | 1.31 | Example |
| 9 | | 250 | 7 | 80 | 0.10 | **no** | - | 6 | 11 | **10** | 0.74 | **10** | **1.47** | **Comparative Example** |
| 10 | | 250 | 7 | 80 | 0.20 | yes | bias voltage | 12 | 7 | 60 | 0.76 | 60 | 1.33 | Example |
| 11 | | 250 | 7 | 80 | 0.20 | yes | orifice temp. | 12 | 7 | 60 | 0.76 | 60 | 1.33 | Example |
| 12 | | 250 | 7 | 80 | 0.20 | **no** | - | 10 | 15 | **30** | 0.76 | **30** | **1.45** | **Comparative Example** |
| 13 | Laser | 400 | 4 | 30 | 0.30 | yes | orifice temp. | 25 | 8 | 100 | 0.74 | 100 | 1.31 | Example |
| 14 | | 400 | 4 | 30 | 0.30 | **no** | - | 8 | 12 | **20** | 0.74 | **20** | **1.46** | **Comparative Example** |
| 15 | | 400 | 4 | 30 | 0.15 | yes | orifice temp. | 35 | 4 | 100 | 0.70 | 100 | 1.29 | Example |
| 16 | | 400 | 4 | 30 | 0.15 | **no** | - | 12 | 15 | **40** | 0.70 | **40** | **1.44** | **Comparative Example** |
| 17 | | 400 | 4 | 30 | 0.10 | yes | orifice temp. | 11 | 3 | 80 | 0.76 | 80 | 1.31 | Example |
| 18 | | 400 | 4 | 30 | 0.10 | **no** | - | 6 | 11 | **10** | 0.76 | **10** | **1.47** | **Comparative Example** |
| 19 | | 300 | 7 | 80 | 0.20 | yes | orifice temp. | 12 | 7 | 60 | 0.78 | 60 | 1.33 | Example |
| 20 | | 300 | 7 | 80 | 0.20 | **no** | - | 10 | 15 | **30** | 0.78 | **30** | **1.45** | **Comparative Example** |

| | | | | | | | | | | | | | | |
|---|---|---|---|---|---|---|---|---|---|---|---|---|---|---|
| ^{*1} Percentage of regions where maximum magnetic domain wall spacing of closure domains within sheet thickness is 10 µm or more, as measured by X-ray magnetic circularly polarized emission microscope, relative to total length of grain-oriented electrical steel strip in rolling direction ^{*2} Percentage of regions of grain-oriented electrical steel sheets where maximum magnetic domain wall spacing of closure domains within sheet thickness is 10 µm or more, as measured by X-ray magnetic circularly polarized emission microscope, relative to total weight of grain-oriented electrical steel sheets | | | | | | | | | | | | | | |

### REFERENCE SIGNS LIST

- 10a to 10h: main magnetic domain
- 20: strain introduction section
- 21a to 21d: closure domain
- RD: rolling direction

## Claims

1. A grain-oriented electrical steel strip in which magnetic domains are refined by strain introduced linearly on at least one surface so as to intersect the rolling direction,
wherein a percentage of regions where the maximum magnetic domain wall spacing of closure domains within the sheet thickness is 10 µm or more, as measured by an X-ray magnetic circularly polarized emission microscope, is 50 % or more, relative to the total length of the grain-oriented electrical steel strip in the rolling direction.

2. A stacked iron core of stacked grain-oriented electrical steel sheets,
wherein a percentage of regions of the grain-oriented electrical steel sheets where the maximum magnetic domain wall spacing of closure domains within the sheet thickness is 10 µm or more, as measured by an X-ray magnetic circularly polarized emission microscope, is 50 % or more, relative to the total weight of the grain-oriented electrical steel sheets.

3. A method of producing the grain-oriented electrical steel strip according to claim 1, the method comprising:
carrying out a magnetic domain refining treatment by irradiating the surface of a steel strip with a high-energy beam while continuously conveying the steel strip in the rolling direction after final annealing,
wherein the percentage is made to be 50 % or more by introducing strain while dynamically controlling the focus of the high-energy beam during irradiation with the high-energy beam.

4. The method of producing the grain-oriented electrical steel strip according to claim 3,
wherein the high-energy beam is an electron beam,
and in the dynamic control of the focus,
the bias voltage is measured,
and the focusing current of the electron beam is adjusted according to the measured bias voltage, based on a predetermined relationship between the bias voltage and the focusing current.

5. The method of producing the grain-oriented electrical steel strip according to claim 3,
wherein the high-energy beam is an electron beam,
wherein an orifice is installed in the beam path of the electron beam to cut off a portion of the electron beam,
and in the dynamic control of the focus,
a temperature of the orifice is measured,
and the focusing current of the electron beam is adjusted according to the measured temperature of the orifice, based on a predetermined relationship between the orifice temperature and the focusing current.

6. The method of producing the grain-oriented electrical steel strip according to claim 3,
wherein the high-energy beam is a laser beam,
wherein an orifice is installed in the beam path of the laser beam to cut off a portion of the laser beam,
and in the dynamic control of the focus,
a temperature of the orifice is measured,
and a position of a focusing lens for the laser beam is adjusted according to the measured temperature of the orifice, based on a predetermined relationship between the orifice temperature and focal length.
